# EUROPEAN PATENT APPLICATION

(11) **EP 4 411 951 A1**
(43) Date of publication of application: **07.08.2024**
(21) Application number: 22890260.7
(22) Date of filing: 26.10.2022
(51) Int. Cl.: H01M 50/284, H01M 50/247, H01M 50/202, H01M 50/178, H01M 50/574, H01M 10/42, H02J 7/00, H04M 1/02

(54) **BATTERY INCLUDING PROTECTIVE CIRCUIT AND ELECTRONIC DEVICE COMPRISING SAME**

(30) Priority: 05.11.2021 KR 20210151487
(71) Applicant: Samsung Electronics Co., Ltd., Suwon-si, Gyeonggi-do 16677 (KR)
(72) Inventor: PARK, Tari, Suwon-si, Gyeonggi-do 16677 (KR); JANG, Kiyoun, Suwon-si, Gyeonggi-do 16677 (KR)
(74) Representative: Gulde & Partner
(86) International application number: PCT/KR2022/016425
(87) International publication number: WO 2023/080525

(57) **Abstract**

An electronic device (101) according to various embodiments disclosed in the present document may comprise: as a battery (400) including a double forming cell structure, electrode assemblies (401a, 401b) including a first electrode tab (1010) including a positive terminal (421) and a negative terminal (422); a pouch (410) which includes a terrace (411) sealing at least a portion of the first electrode tab (1010) to be withdrawn to the outside, and surrounds (forming) the electrode assembly on both sides; a first protective circuit module (810) electrically connected to the electrode assembly through the withdrawn first electrode tab and disposed on one side of the terrace with respect to the withdrawal direction of the first electrode tab; and a second protective circuit module (820) electrically connected to the electrode assembly and disposed on the other side of the terrace.

## Description

### [Technical Field]

Various embodiments disclosed herein relate to an electronic device including a battery and, for example, relate to a battery including a protection circuit module (PCM) and an electronic device including the same.

### [Background Art]

With the development of digital technology, electronic devices are provided in various forms, such as smartphones, tablet personal computers (PCs), or personal digital assistants (PDAs). Electronic devices are also being developed in wearable forms for users so as to improve portability and user accessibility. Electronic devices may include batteries to provide power.

### [Disclosure of Invention]

### [Technical Problem]

The need for high-capacity batteries is increasing due to the need for increased portability of electronic device. Therefore, the capacity and current magnitude of batteries may be increased, and protection circuit modules may also be designed to cope with high power and/or high current magnitude.

When it comes to the portability of an electronic device, it is necessary to maximize the internal space of the electronic device. Therefore, even a high-capacity battery must be designed to minimize the space required for placement, and the same is applied to a protection circuit module that will be included in the battery.

According to various embodiments, an electronic device may include a battery that efficiently uses a limited space and has multiple protection circuit modules.

### [Solution to Problem]

In accordance with various embodiments disclosed herein, an electronic device 101 may include: as a battery 400 including a double forming cell structure, an electrode assembly 401a or 401b including a first electrode tab 1010 including a positive terminal 421 and a negative terminal 422; a pouch 410 which includes a terrace 411 sealing the pouch such that at least a portion of the first electrode tab 1010 is exposed outside, the pouch wrapping (forming) the electrode assembly with both surfaces thereof; a first protection circuit module 810 electrically connected to the electrode assembly via the exposed first electrode tab and disposed on one side of the terrace with respect to the extension direction of the first electrode tab; and a second protection circuit module 820 electrically connected to the electrode assembly and disposed on the other side of the terrace.

In accordance with various embodiments disclosed herein, a battery 400 may include: an electrode assembly 401a or 401b including a first electrode tab 1010; a pouch 410 which includes a terrace 411 sealing the pouch such that at least a portion of the first electrode tab is exposed outside, the pouch wrapping the electrode assembly with both surfaces thereof; a first protection circuit module 810 electrically connected to the electrode assembly via the exposed first electrode tab and disposed on one side of the terrace with respect to the extension direction of the first electrode tab; and a second protection circuit module 820 electrically connected to the electrode assembly and disposed on the other side of the terrace.

### [Advantageous Effects of Invention]

According to various embodiments, a high-capacity battery may be protected by increasing the allowable current of a protection circuit module, and the limited internal space of the electronic device may be efficiently used to prevent an increase in the overall size of the battery despite including multiple protection circuit modules.

According to an embodiment, battery damage caused by external impact resulting from a drop may be reduced.

### [Brief Description of Drawings]

In describing the drawings, identical or similar reference numerals may be used to designate identical or similar elements.
FIG. 1 is a block diagram of an electronic device in a network environment according to various embodiments.
FIG. 2 is a block diagram of a power management module and a battery according to various embodiments.
FIG. 3 is an exploded perspective view of the electronic device in FIG. 1.
FIG. 4 is a perspective view of a battery according to various embodiments.
FIG. 5 illustrates the internal structure of a battery according to an embodiment.
FIG. 6 is a side cross-sectional view of a portion of a battery including a single forming cell structure.
FIG. 7 is a side cross-sectional view of a portion of a battery including a double forming cell structure.
FIG. 8 is a side cross-sectional view of a battery including multiple protection circuit modules according to various embodiments.
FIG. 9 is a side cross-sectional view of a battery including multiple protection circuit modules according to various embodiments.
FIG. 10 is a side cross-sectional view of a battery including multiple protection circuit modules according to various embodiments.

### [Mode for the Invention]

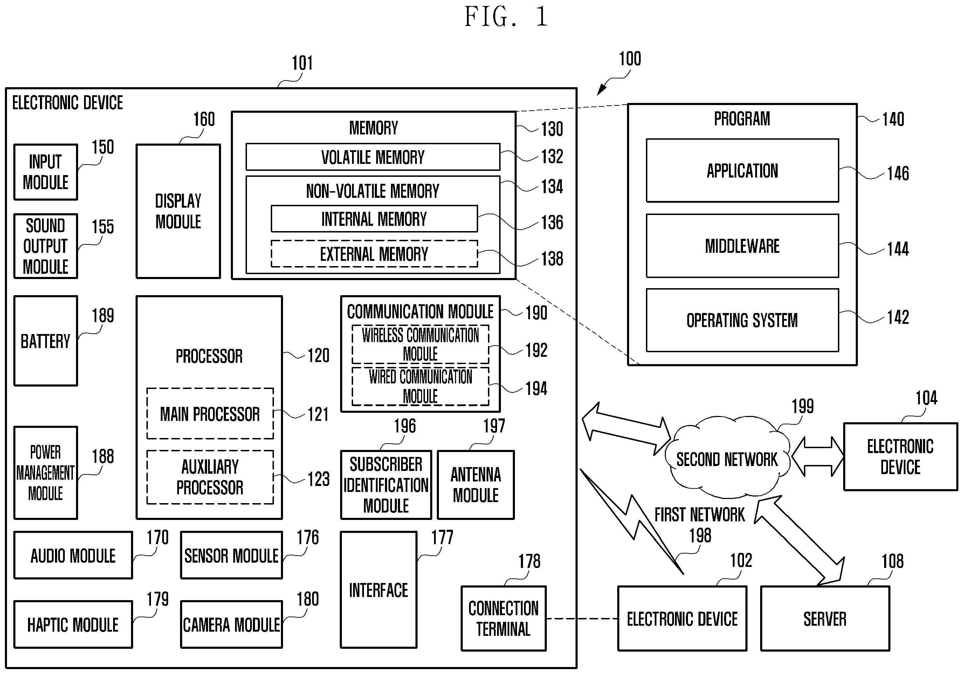

FIG. 1 is a block diagram illustrating an electronic device in a network environment according to various embodiments. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter(mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

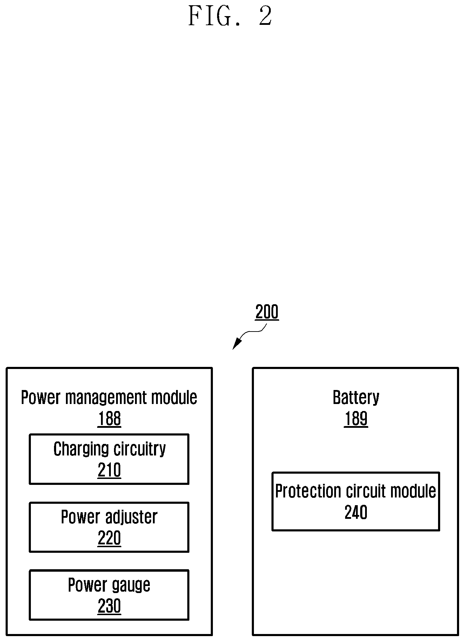

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

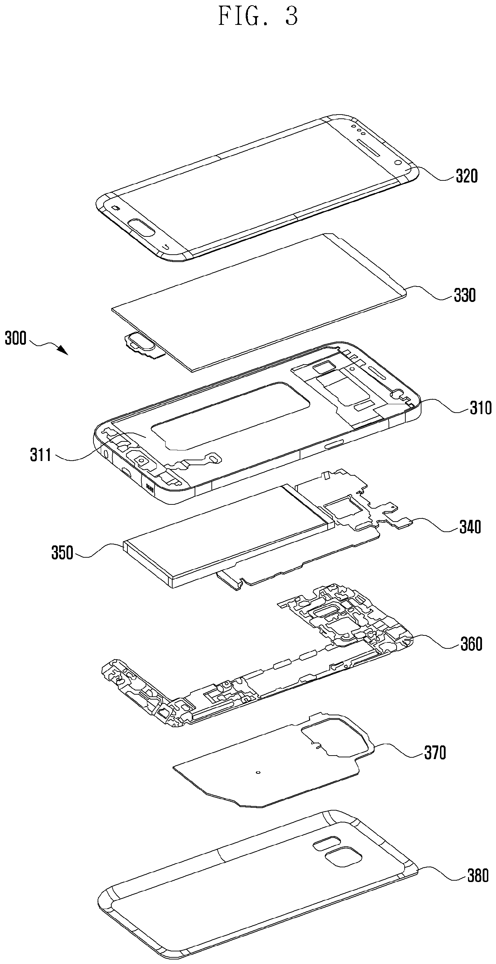

FIG. 3 is an exploded perspective view of the electronic device in FIG. 1.

Referring to FIG. 3, the electronic device 300 (e.g., the electronic device 101 in FIG. 1) may include a lateral bezel structure 310, a first support member 311 (e.g., a bracket), a front plate 320, a display 330, a printed circuit board 340, a battery 350, a second support member 360 (e.g., a rear case), an antenna 370, and a rear plate 380. In some embodiments, at least one (e.g., the first support member 311 or the second support member 360) of the elements may be omitted from the electronic device 300, or other elements may be additionally included therein. At least one of elements of the electronic device 300 may be the same as or similar to at least one of elements of the electronic device 101 in FIG. 1, and overlapping descriptions thereof will be omitted hereinafter.

The first support member 311 may be disposed inside the electronic device 300, and may be connected to the lateral bezel member 310 or integrally formed with the lateral bezel member 310. For example, the first support member 311 may be formed of a metal material and/or a non-metal (e.g., polymer) material. The first support member 311 may have one surface to which the display 330 is coupled, and the other surface to which the printed circuit board 340 is coupled. A processor (e.g., the processor 120 in FIG. 1), a memory (e.g., the memory 130 in FIG. 1), and/or an interface (e.g., the interface 177 in FIG. 1) may be mounted to the printed circuit board 340. For example, the processor may include one or more of a central processing device, an application processor, a graphic processing device, an image signal processor, a sensor hub processor, and a communication processor.

For example, the memory may include a volatile memory or a non-volatile memory.

For example, the interface may include a high definition multimedia interface (HDMI), a universal serial bus (USB) interface, an SD card interface, and/or an audio interface. For example, the interface may electrically or physically connect the electronic device 300 to an external electronic device, and may include a USB connector, an SD card/MMC connector, or an audio connector.

The battery 350 may be a device for supplying power to at least one element of the electronic device 300, and for example, may include a non-rechargeable primary cell, a rechargeable secondary cell, or a fuel cell. For example, at least a part of the battery 350 may be disposed on substantially the same plane as the printed circuit board 340. The battery 350 may be integrally disposed inside the electronic device 100. As another embodiment, the battery 350 may also be disposed detachably from the electronic device 100.

The antenna 370 may be disposed between the rear plate 380 and the battery 350. For example, the antenna 370 may also include a near field communication (NFC) antenna, a wireless charging antenna, and/or a magnetic secure transmission (MST) antenna. For example, the antenna 370 may be configured to perform a short-range communication with an external device, or may wirelessly transmit/receive a power required for charging. In another embodiment, an antenna structure may be formed by a part of the lateral bezel structure 310 and/or the first support member 311, or a combination thereof.

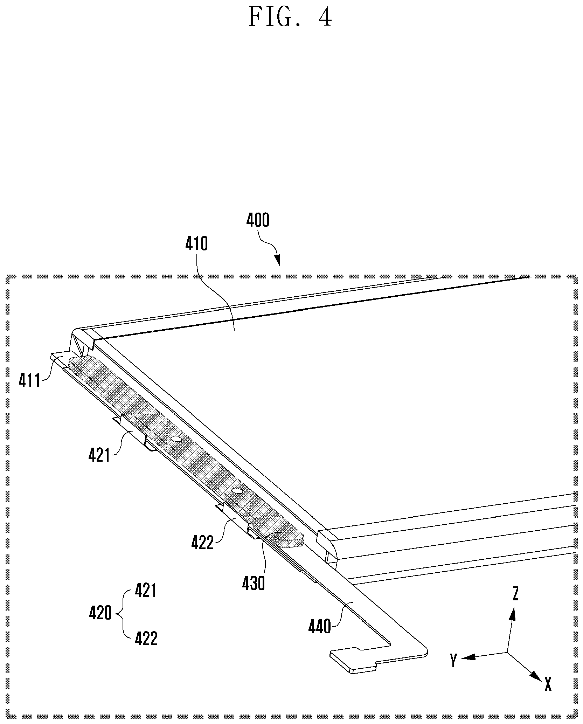

FIG. 4 is a perspective view of a battery according to various embodiments.

Referring to FIG. 4, a battery 400 may include a pouch 410, an electrode tab 420, a protection circuit module 430, and a printed circuit board (PCB) 440. The battery 400 may include at least some of the functions and/or elements of the battery 189 in FIG. 1 and/or FIG. 2.

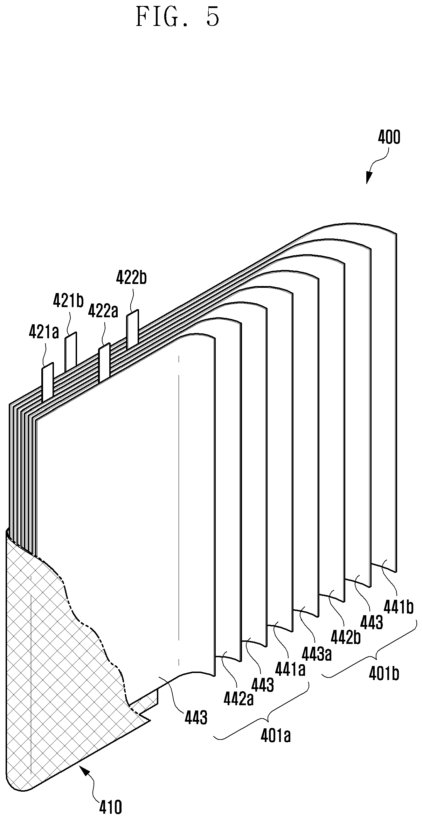

The pouch 410 may include an electrode assembly therein. The pouch 410 may externally wrap around (form) the electrode assembly to form the external structure of the battery 400. According to an embodiment, the pouch 410 may wrap around the electrode assembly in a form including a double forming cell structure. The electrode assembly may include a structure in which at least one positive electrode plate and at least one negative electrode plate are stacked. The electrode assembly is disposed inside the pouch 410 and may include a jelly-roll shape in which the at least one positive electrode plate and the at least one negative electrode plate are alternately stacked with a separator therebetween and then wound. The electrode assembly included in the pouch will be described in more detail with reference to FIG. 5.

The pouch 410 may include a terrace 411. The pouch 410 may include an electrode assembly wound in a jelly-roll shape therein, and may wrap around and seal the electrode assembly such that the electrode tab 420 is exposed to the outside. The terrace 411 may be formed in the direction of extension of the electrode tab 420 and may be an area where the pouch 410 is sealed. According to an embodiment, the electrode tab 420 may include a positive terminal 421 and a negative terminal 422. The positive terminal 421 and the negative terminal 422 may extend to the outside of the pouch 410 via the terrace 411, and may electrically connect the elements (e.g., the protection circuit module 430) of the pouch 410 to the electrode assembly sealed in the pouch 410. According to an embodiment, the pouch 410 may have a shape of a plate having a thickness. The terrace 411 may be formed on one side of the pouch 410 and may include a shape in which the terrace 411 extends to bisect the one side of the pouch 410, on which the terrace 411 is formed, in the thickness direction.

The protection circuit module (PCM) 430 may be electrically coupled to the electrode assembly via the electrode tab 420. The protection circuit module 430 may include at least some of the functions and/or the elements of the battery protection circuit 240 in FIG. 2. The protection circuit module 430 may include a printed circuit board (PCB), at least one integrated circuit printed on the printed circuit board, at least one transistor, and/or a passive element (e.g., a capacitor). The protection circuit module 430 may be disposed on at least a partial area of the terrace 411. According to an embodiment, the protection circuit module 430 may be disposed on the printed circuit board 440 and electrically connected to the electrode tab 420 that extends out of the terrace 411.

The protection circuit module 430 may be implemented in the form of a PCB and connected to elements (e.g., the processor 120) of the electronic device (e.g., the electronic device 101 in FIG. 1) other than the battery via another printed circuit board 440. The protection circuit module 430 may perform one or more of various functions (e.g., pre-blocking functions) to prevent performance degradation of or burning damage to the battery 400. Additionally or alternatively, the protection circuit module 430 may be configured as at least a part of a battery management system (BMS) that may perform various functions, including cell balancing, battery capacity measurement, measurement of the number of charge/discharge cycles, temperature measurement, or voltage measurement. According to an embodiment, the protection circuit module 430 may measure and/or identify at least one of the voltage level (e.g., charge level) of the battery 400 and/or the magnitude of input/output currents of the battery 400. According to an embodiment, the protection circuit module 430 may block a current of the battery 400 based on the voltage level of the battery 400 and/or the magnitude of the input/output currents of the battery 400.

FIG. 5 illustrates the internal structure of a battery 400 (e.g., the battery 400 in FIG. 4) according to an embodiment.

Referring to FIG. 5, the battery 400 may include a pouch 410 and at least one electrode assembly (e.g., a first electrode assembly 401a and/or a second electrode assembly 401b).

According to various embodiments, the electrode assembly may be disposed in the pouch 410 of the battery 400 (e.g., the battery 400 in FIG. 4). The pouch 410 may externally wrap around (form) the electrode assembly and form the external structure of the battery 400. According to an embodiment, the pouch 410 may wrap around the electrode assembly (e.g., the first electrode assembly 401a and/or the second electrode assembly 401b) in a form including a double forming cell structure. The electrode assembly (e.g., the first electrode assembly 401a and/or the second electrode assembly 401b) may have a structure in which at least one positive electrode plate (e.g., a first positive electrode plate 441a or a second positive electrode plate 441b), at least one separator 443 or 443a, and at least one negative electrode plate (e.g., a first negative electrode plate 442a or a second negative electrode plate 442b) are stacked. The electrode assembly (e.g., the first electrode assembly 401a and/or the second electrode assembly 401b) is disposed in the pouch 410, and includes a jelly-roll shape in which at least one positive electrode plate (e.g., the first positive electrode plate 441a or the second positive electrode plate 441b) and at least one negative electrode plate (e.g., the first negative electrode plate 442a or the second negative electrode plate 442b) are alternately stacked with separators 443 therebetween and then wound. According to an embodiment, the electrode assembly (e.g., the first electrode assembly 401a and/or the second electrode assembly 401b) may be disposed with electrolyte in the pouch 410 by placing the electrode assembly in the internal space of the pouch 400, then injecting the electrolyte and sealing the pouch. According to an embodiment, the first electrode assembly 401a may include a separator 443, a first negative electrode plate 442a, a separator 443, and a first positive electrode plate 441a stacked in order, and may be stacked and wound with the second electrode assembly 401b. According to an embodiment, the second electrode assembly 401b may include a separator 443a, a second negative electrode plate 442b, a separator 443, a second positive electrode plate 441b stacked in order, and may be stacked and wound with the first electrode assembly 401a.

The battery 400 may, for example, convert chemical energy of the positive electrode plates (e.g., the first positive electrode plate 441a and the second positive electrode plate 441b) and the negative electrode plates (e.g., the first negative electrode plate 442a and the second negative electrode plate 442b) into electrical energy, and may supply power to the protection circuit module 430 via positive terminals (e.g., a first positive terminal 421a and a second positive terminal 421b) connected to the positive plates (e.g., the first positive electrode plate 441a and the second positive electrode plate 441b) and negative terminals (e.g., a first negative terminal 422a and a second negative terminal 422b) connected to the negative plates (e.g., the first negative electrode plate 442a and the second negative electrode plate 442b).

According to an embodiment, the positive electrode plates (e.g., the first positive electrode plate 441a and the second positive electrode plate 441b) may include a plate, a layer, or a foil including a metal such as aluminum, and may be coated with a positive electrode active material. The positive electrode active material is a material that involves in the electrode reaction, such as NCM, NCA, LCO, LMO, or LFP, and may include a lithium-based oxide as a primary component.

According to an embodiment, the negative electrode plates (e.g., the first negative electrode plate 442a and the second negative electrode plate 442b) may include a plate, a layer, or a foil including a metal, such as copper, and may be coated with a negative electrode active material. The negative electrode active material may include a carbon material (e.g., graphite), a silicon-based oxide, or silicon carbon as a primary component.

According to an embodiment, the separators 443 may be disposed between the positive electrode plates and the negative electrode plates to prevent physical contact of the positive electrode plates and the negative electrode plates. The separators 443 may each include a variety of porous materials through which ions can pass. For example, the separators 443 may include a non-metallic material such as polyethylene (PC) and/or polypropylene (PP).

According to an embodiment, the positive electrode plates or the negative electrode plates may charge or discharge power to or from the battery 400 via an oxidation or reduction reaction, respectively, via an electrolyte.

According to various embodiments, the battery 400 may include multiple electrode assemblies 401a and 401b. According to an embodiment, the battery 400 may include the first electrode assembly 401a and the second electrode assembly 401b. The first electrode assembly 401a may include a structure in which one separator 443, the first negative electrode plate 442a, another separator 443, and/or the first positive electrode plate 441a are overlapped and sequentially stacked. The second electrode assembly 401b may include a structure in which one separator 443a, the second negative electrode plate 442b, another separator 443, and/or the second positive electrode plate 441b are overlapped and sequentially stacked.

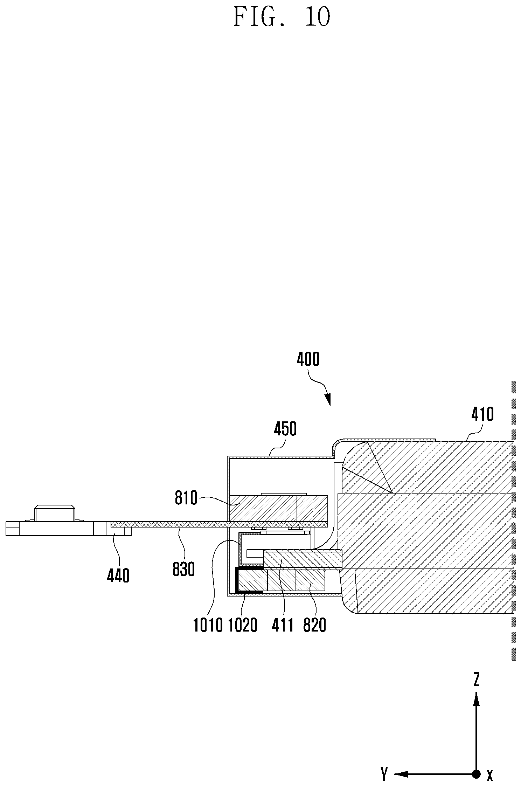

According to an embodiment, the first electrode assembly 401a and the second electrode assembly 401b may be stacked with the separator 443a therebetween. According to an embodiment, the first electrode assembly 401a and the second electrode assembly 401b may be arranged in a wound jellyroll structure, either individually or integrally. According to an embodiment, the first negative terminal 422a connected to the first negative electrode plate 442a and the first positive terminal 421a connected to the first positive electrode plate 441a may be physically connected to each other in insulation from each other to form one electrode tab (e.g., a first electrode tab (e.g., the electrode tab 420 in FIG. 4 or the first electrode tab 1010 in FIG. 10), and the second negative terminal 422b connected to the second negative electrode plate 442b and the second positive terminal 421b connected to the second positive electrode plate 441b may be physically connected to each other in isolation from each other to form one electrode tab (e.g., a second electrode tab (e.g., the electrode tab 420 in FIG. 4 or the second electrode tab 1020 in FIG. 10). According to another embodiment, the first negative terminal 422a and the second negative terminal 422b may be electrically connected to each other in parallel to form one electrode tab, and the first positive terminal 421a and the second positive terminal 421b may be electrically connected to each other in parallel to form another electrode tab. In an embodiment, the first electrode tab and the second electrode tab may be physically connected to each other in isolation from each other to form one electrode tab (e.g., the electrode tab 420 in FIG. 4) including one positive terminal (e.g., the positive terminal 421 in FIG. 4) and one negative terminal (e.g., the negative terminal 422 in FIG. 4).

The electrode tabs may include various structures. However, herein, for convenience, a description will be made of a structure in which one electrode tab (e.g., the electrode tab 420 in FIG. 4), which includes one positive terminal (e.g., the positive terminal 421 in FIG. 4) and one negative terminal (e.g., the negative terminal 422 in FIG. 4), is formed. Alternatively, a description will be made of a structure in which the first negative terminal 422a and the first positive terminal 421a are physically connected to each other in isolation from each other to form one electrode tab (e.g., the first electrode tab), and the second negative terminal 422b and the second positive terminal 421b are physically connected to each other in isolation from each other to form another electrode tab (e.g., the second electrode tab).

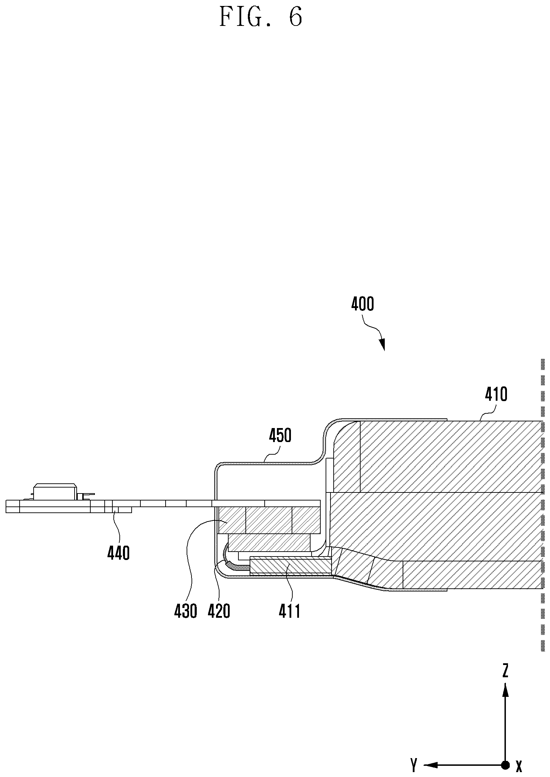

FIG. 6 is a side cross-sectional view of a portion of a battery including a single forming cell structure.

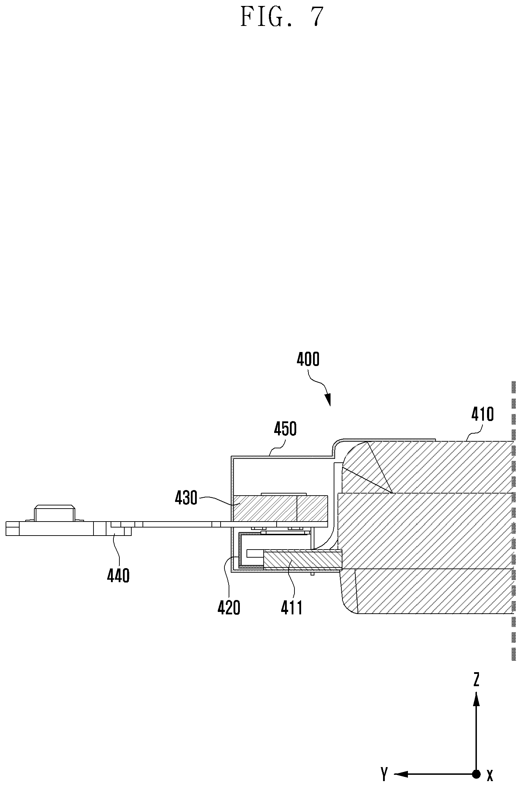

FIG. 7 is a side cross-sectional view of a portion of a battery including a double forming cell structure according to various embodiments.

The battery 400 illustrated in FIG. 5 includes a single forming cell structure.

Referring to FIG. 6, a battery 400 may include a cover 450 that covers a terrace 411, an electrode tab 420, a protection circuit module 430 and at least a portion of a printed circuit board 440. The cover 450 may have an area formed therein and covered by the cover 450 and a pouch 410.

When the battery includes a single forming cell structure, the terrace 411 may be formed at the bottom with respect to the thickness direction (e.g., the z-axis direction) of the pouch 410. Thus, the terrace 411 may be disposed at a lower side with respect to the z-axis direction in an area formed in the cover 450, and the protection circuit module 430 connected via the electrode tab 420 may be disposed above the terrace 411.

The battery 400 illustrated in FIG. 6 includes a double forming cell structure.

Referring to FIG. 7, when the battery 400 includes a double forming cell structure, the structure of the pouch 410 may be different when compared to a battery including a single forming cell structure (e.g., the battery 400 in FIG. 5).

Referring to FIG. 7, when the pouch 410 is wrapped around the electrode assembly in double forming, the position of the terrace 411 formed by sealing the electrode assembly may change. Specifically, the terrace 411 may be positioned perpendicular to the thickness direction (e.g., the z-axis direction) of the pouch 410 to divide the thickness of the pouch 410. For example, the terrace 411 may substantially bisect the thickness of the pouch 410. In another example, the terrace 411 may be disposed in a position in which the terrace 411 unequally bisects the thickness of the pouch 410 but a space may be formed at the bottom of the terrace 411 with respect to the z-axis direction.

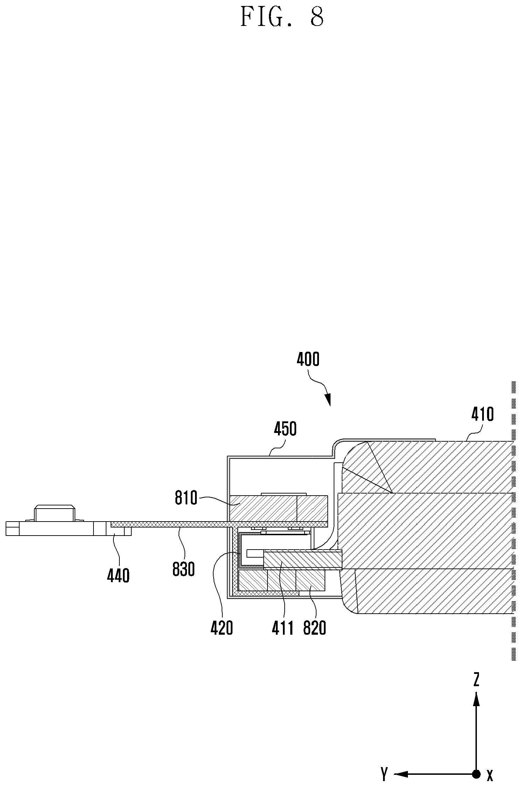

FIG. 8 is a side cross-sectional view of a battery including multiple protection circuit modules according to various embodiments.

Referring to FIG. 8, a battery 400 (e.g., the battery 400 in FIG. 6) may include a double-sided formed cell structure.

According to various embodiments, the battery 400 may include a pouch 410, an electrode tab 420, a first protection circuit module 810, a second protection circuit module 820, a connection substrate 830, and a cover 450.

The pouch 410 may include a terrace 411. The pouch 410 may include an electrode assembly wound in a j elly-roll shape therein, and may wrap around and then seal the electrode assembly such that the electrode tab 420 is exposed to the outside. The terrace 411 may be an area which is formed in the extension direction of the electrode tab 420 and in which the pouch 410 is sealed. According to an embodiment, the electrode tab 420 may include a positive terminal (e.g., the positive terminal 421 in FIG. 4) and a negative terminal (e.g., the negative terminal 422 in FIG. 4). The positive terminal 421 and the negative terminal 422 may extend to the outside of the pouch 410 via the terrace 411, and may electrically connect an element (e.g., the first protection circuit module 810) of the battery 400 to the electrode assembly sealed in the pouch 410. According to an embodiment, the pouch 410 may include a shape of a plate having a thickness. The terrace 411 may be formed on one side of the pouch 410 and may include a shape in which the terrace 411 extends to bisect the one side of the pouch 410, on which the terrace 411 is formed, in the thickness direction (e.g., z-axis direction).

According to various embodiments, the battery 400 may include multiple protection circuit modules (e.g., the first circuit module 810 and the second protection circuit module 820). The first protection circuit module 810 and the second protection circuit module 820 may be electrically connected to the electrode assembly in the pouch 410 via the electrode tab 420. According to an embodiment, the first protection circuit module 810 and the second protection circuit module 820 may each include at least one integrated circuit, transistor, and/or passive element (e.g., capacitor). According to an embodiment, the first protection circuit module 810 and the second protection circuit module 820 may be connected in parallel to each other with respect to the electrode assembly. According to an embodiment, the first protection circuit module 810 may block a current of the battery 400 based on the charge level (e.g., voltage level) of the battery 400 and/or a current magnitude in the battery 400. For example, the integrated circuit of the first protection circuit module 810 may identify the charge level and/or the current magnitude, and may control the at least one transistor based on the identified charge level and/or current magnitude to block power that is input to or output from the battery 400. According to an embodiment, the second protection circuit module 820 may be connected in parallel to the first protection circuit module 810 to increase the allowable range of current that is input into/output from the battery 400. The second protection circuit module 820 may include at least one transistor and/or a passive element. According to an embodiment, the first protection circuit module 810 and the second protection circuit module 820 may each include a printed circuit board, and the first protection circuit module 810 and the second protection circuit module 820 may each be formed as a circuit printed on the printed circuit board and at least one element connected to the printed circuit board. According to an embodiment, the printed circuit board (e.g., a first printed circuit board) of the first protection circuit module 810 and the printed circuit board (e.g., a second printed circuit board) of the second protection circuit module 820 may be disposed at locations spaced apart from each other with reference to the terrace 411.

According to various embodiments, the cover 450 may be disposed to cover at least a partial area of the pouch 410, the terrace 411, the electrode tab 420, the first protection circuit module 810, the second protection circuit module 820, and at least a portion of the connection circuit board 830. The cover 450 may form a space therein with the at least partial area of the pouch 410. Due to the double forming cell structure, the terrace 411 may be formed at a location in which the terrace 411 divides the thickness of the pouch 410 (e.g., a surface formed by the pouch 410 in the z-axis direction). Thus, the area formed by the cover 450 and the pouch 410 may be divided into an upper (e.g., z-axis upper) area (e.g., a first area) with respect to the terrace 411 and a lower (e.g., z-axis lower) area (e.g., a second area) with respect to the terrace 411.

According to various embodiments, the first protection circuit module 810 may be disposed in the upper area with respect to the terrace 411. According to an embodiment, the first protection circuit module 810 may be disposed in the upper area in the area formed by the cover 450 and the pouch 410. According to various embodiments, the second protection circuit module 820 may be disposed in the lower area with respect to the terrace 411. According to an embodiment, the second protection circuit module 820 may be disposed in the lower area in the area formed by the cover 450 and the pouch 410.

According to various embodiments, the first protection circuit module 810 and the second protection circuit module 820 may each be connected to the electrode assembly. According to an embodiment, the electrode assembly is disposed in the pouch 410, and the electrode tab 420 connected to the electrode assembly may extend to the outside of the pouch 410 through the terrace 411. According to an embodiment, the first protection circuit module 810 and/or the second protection circuit module 820 may be electrically connected to the electrode assembly. For example, the electrode tab 420 may be electrically connected to the first protection circuit module 810. Additionally, the second protection circuit module 820 may be electrically connected to the first protection circuit 810, and may be electrically connected to the electrode tab 420 via the first protection circuit 810. According to an embodiment, the first protection circuit module 810 and/or the second protection circuit module 820 may identify the input/output current and/or voltage levels of the electrode assembly.

Referring to FIG. 8, the first protection circuit module 810 may be electrically connected to the electrode assembly via the electrode tab 420. The electrode tab 420 may include a positive terminal (e.g., the positive terminal 421 in FIG. 4) and a negative terminal (e.g., the negative terminal 422 in FIG. 4). The first protection circuit module 810 may form an electrical connection with both the positive terminal 421 and the negative terminal 422.

Referring to FIG. 8, the second protection circuit module 820 may be electrically connected to the electrode assembly via the first protection circuit module 810. According to various embodiments, the second protection circuit module 820 may be electrically connected to the first protection circuit module 810. According to an embodiment, the second protection circuit module 820 may be connected to the first protection circuit module 810 via the connection circuit board 830. The connection circuit board 830 may include a printed circuit board (PCB) on which at least one circuit is printed. According to an embodiment, the connection circuit board 830 may include a flexible printed circuit board (FPCB) and may be bent at least a portion thereof to electrically connect the first protection circuit module 810 to the second protection circuit module 820. According to an embodiment, the second protection circuit module 820 may be electrically connected to the first protection circuit module 810 via the connection circuit board 830, and the first protection circuit module 810 may be electrically connected to the electrode assembly via the electrode tab 420.

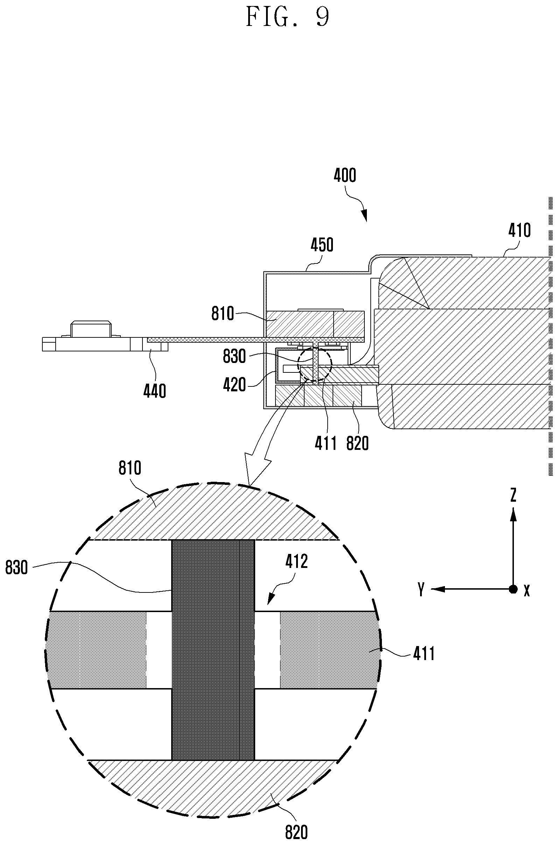

FIG. 9 is a side cross-sectional view of a battery including multiple protection circuit modules according to various embodiments.

Referring to FIG. 9, a battery 400 (e.g., the battery 400 in FIG. 6) may include a double forming cell structure.

According to various embodiments, the battery 400 may include a pouch 410, an electrode tab 420, a first protection circuit module 810, a second protection circuit module 820, a connection substrate 830, and a cover 450.

The pouch 410 may include a terrace 411. The pouch 410 may include an electrode assembly wound in a jelly-roll shape therein, and may wrap around the electrode assembly such that the electrode tab 420 is exposed to the outside and then seal the electrode assembly. The terrace 411 may be formed in the direction of extension of the electrode tab 420 and may be an area where the pouch 410 is sealed. According to an embodiment, the electrode tab 420 may include a positive terminal (e.g., the positive terminal 421 in FIG. 4) and a negative terminal (e.g., the negative terminal 422 in FIG. 4). The positive terminal 421 and the negative terminal 422 may extend to the outside of the pouch 410 via the terrace 411, and may electrically connect an element (e.g., the first protection circuit module 810) of the battery 400 to the electrode assembly sealed in the pouch 410. According to an embodiment, the pouch 410 may include a shape of a plate having a thickness. The terrace 411 may be formed on one side of the pouch 410, and may include a shape in which the terrace 411 extends to bisect the one side surface of the pouch 410, on which the terrace 411 is formed, in a thickness direction (e.g., the z-axis direction).

According to various embodiments, the battery 400 may include multiple protection circuit modules (e.g., the first circuit module 810 and the second protection circuit module 820). The first protection circuit module 810 and the second protection circuit module 820 may be electrically connected to the electrode assembly in the pouch 410 via the electrode tab 420. According to an embodiment, the first protection circuit module 810 and the second protection circuit module 820 may each include at least one integrated circuit, transistor, and/or passive element (e.g., capacitor). According to an embodiment, the first protection circuit module 810 and the second protection circuit module 820 may be connected in parallel to each other with respect to the electrode assembly. According to an embodiment, the first protection circuit module 810 may block a current of the battery 400 based on the charge level (e.g., voltage level) of the battery 400 and/or the magnitude of current of the battery 400. For example, the integrated circuit of the first protection circuit module 810 may identify a charge level and/or a current magnitude, and control the at least one transistor based on the identified charge level and/or current magnitude to block power that is input into/output from the battery 400. According to an embodiment, the second protection circuit module 820 may be connected in parallel to the first protection circuit module 810 to increase the allowable range of current that is input into/output from the battery 400. The second protection circuit module 820 may include at least one transistor and/or passive element. According to an embodiment, the first protection circuit module 810 and the second protection circuit module 820 may each include a printed circuit board, and the first protection circuit module 810 and the second protection circuit module 820 may each be formed as a circuit printed on the printed circuit board and at least one element connected to the printed circuit board. According to an embodiment, the printed circuit board (e.g., a first printed circuit board) of the first protection circuit module 810 and the printed circuit board (e.g., a second printed circuit board) of the second protection circuit module 820 may be disposed at locations spaced apart from each other with respect to the terrace 411.

According to various embodiments, the cover 450 may be disposed to cover at least a partial area of the pouch 410, the terrace 411, the electrode tab 420, the first protection circuit module 810, the second protection circuit module 820, and at least a portion of the connection circuit board 830. The cover 450 may form a space therein with the at least partial area of the pouch 410. Due to the double forming cell structure, the terrace 411 may be formed at a location in which the terrace 411 divides the thickness of the pouch 410 (e.g., a surface formed by the pouch 410 in the z-axis direction). Thus, the area formed by the cover 450 and the pouch 410 may be divided into an upper (e.g., z-axis upper) area (e.g., a first area) with respect to the terrace 411 and a lower (e.g., z-axis lower) area (e.g., a second area) with respect to the terrace 411.

According to various embodiments, the first protection circuit module 810 may be disposed in the upper area with respect to the terrace 411. According to an embodiment, the first protection circuit module 810 may be disposed in the upper area in the area formed by the cover 450 and the pouch 410. According to various embodiments, the second protection circuit module 820 may be disposed in the lower area with respect to the terrace 411. According to an embodiment, the second protection circuit module 820 may be disposed in the lower area in the area formed by the cover 450 and the pouch 410.

According to various embodiments, the first protection circuit module 810 and the second protection circuit module 820 may each be connected to the electrode assembly. According to an embodiment, the electrode assembly is disposed in the pouch 410, and the electrode tab 420 connected to the electrode assembly may extend to the outside of the pouch 410 through the terrace 411. According to an embodiment, the first protection circuit module 810 and/or the second protection circuit module 820 may be electrically connected to the electrode assembly. For example, the electrode tab 420 may be electrically connected to the first protection circuit module 810. Additionally, the second protection circuit module 820 may be electrically connected to the first protection circuit 810, and may be electrically connected to the electrode tab 420 via the first protection circuit 810. According to an embodiment, the first protection circuit module 810 and/or the second protection circuit module 820 may identify the input/output current and/or voltage levels of the electrode assembly.

Referring to FIG. 9, the first protection circuit module 810 may be electrically connected to the electrode assembly via the electrode tab 420. The electrode tab 420 may include a positive terminal (e.g., the positive terminal 421 in FIG. 4) and a negative terminal (e.g., the negative terminal 422 in FIG. 4). The first protection circuit module 810 may form an electrical connection with both the positive terminal 421 and the negative terminal 422.

Referring to FIG. 9, the second protection circuit module 820 may be electrically connected to the electrode assembly via the first protection circuit module 810. According to various embodiments, the second protection circuit module 820 may be electrically connected to the first protection circuit module 810. According to an embodiment, the second protection circuit module 820 may be connected to the first protection circuit module 810 via the connection circuit board 830. The connection circuit board 830 may include a printed circuit board (PCB) on which at least one circuit is printed. According to an embodiment, the connection circuit board 830 may include a flexible printed circuit board (FPCB) and may electrically connect the first protection circuit module 810 to the second protection circuit module 820. According to an embodiment, the second protection circuit module 820 may be electrically connected to the first protection circuit module 810 via the connection circuit board 830, and the first protection circuit module 810 may be electrically connected to the electrode assembly via the electrode tab 420.

Referring to FIG. 9, the terrace 411 may have a hollow portion 412 formed in at least a partial area thereof. The hollow portion 412 may include at least one hole that penetrate the terrace 411 in the z-axis direction. According to an embodiment, the hollow portion 412 may connect at least some areas inside the cover 450 that are divided into the first area and the second area with respect to the terrace 411. According to an embodiment, the connection circuit board 830 may be disposed to pass through the hollow portion 412. According to an embodiment, the connection circuit board 830 may pass through the hollow portion 412 to electrically connect the first protection circuit module 810 to the second protection circuit module 820.

FIG. 10 is a side cross-sectional view of a battery including multiple protection circuit modules according to various embodiments.

Referring to FIG. 10, a battery 400 (e.g., the battery 400 in FIG. 6) may include a double forming cell structure.

According to various embodiments, the battery 400 may include a pouch 410, a first electrode tab 1010, a second electrode tab 1020, a first protection circuit module 810, a second protection circuit module 820, 830, and a cover 450.

The pouch 410 may include a terrace 411. The pouch 410 may include an electrode assembly wound in a jelly-roll shape therein, and may wrap around the electrode assembly such that an electrode tab (e.g., the first electrode tab 1010 and/or the second electrode tab 1020) is exposed to the outside, and then seal the electrode assembly. The terrace 411 may be formed in the direction of extension of the electrode tab (e.g., the first electrode tab 1010 and/or the second electrode tab 1020) and may be an area where the pouch 410 is sealed. According to an embodiment, the first electrode tab 1010 may include a first positive terminal (e.g., the first positive terminal 421a in FIG. 5) and a first negative terminal (e.g., the first negative terminal 422a in FIG. 5). According to an embodiment, the second electrode tab 1020 may include a second positive terminal (e.g., the first positive terminal 421b in FIG. 5) and a second negative terminal (e.g., the second negative terminal 422b in FIG. 5). According to an embodiment, the pouch 410 may include a shape of a plate having a thickness. The terrace 411 may be formed on one side of the pouch 410, and may include a shape in which the terrace 411 extends to bisect the one side surface of the pouch 410, on which the terrace 411 is formed, in a thickness direction (e.g., the z-axis direction).

According to various embodiments, the battery 400 may include multiple protection circuit modules (e.g., the first circuit module 810 and the second protection circuit module 820). The first protection circuit module 810 and the second protection circuit module 820 may be electrically connected to the electrode assembly in the pouch 410 via the first electrode tab 1010 and the second electrode tab 1020, respectively. According to an embodiment, the first protection circuit module 810 and the second protection circuit module 820 may each include at least one integrated circuit, transistor, and/or passive element (e.g., capacitor). According to an embodiment, the first protection circuit module 810 and the second protection circuit module 820 may be connected in parallel to each other with respect to the electrode assembly. According to an embodiment, the first protection circuit module 810 may block a current of the battery 400 based on the charge level (e.g., voltage level) of the battery 400 and/or the magnitude of current of the battery 400. For example, the integrated circuit of the first protection circuit module 810 may identify a charge level and/or a current magnitude, and control the at least one transistor based on the identified charge level and/or current magnitude to block power that is input into/output from the battery 400. According to an embodiment, the second protection circuit module 820 may be connected in parallel to the first protection circuit module 810 to increase the allowable range of current that is input into/output from the battery 400. The second protection circuit module 820 may include at least one transistor and/or passive element. According to an embodiment, the first protection circuit module 810 and the second protection circuit module 820 may each include a printed circuit board, and the first protection circuit module 810 and the second protection circuit module 820 may each be formed as a circuit printed on the printed circuit board and at least one element connected to the printed circuit board. According to an embodiment, the printed circuit board (e.g., a first printed circuit board) of the first protection circuit module 810 and the printed circuit board (e.g., a second printed circuit board) of the second protection circuit module 820 may be disposed at locations spaced apart from each other with respect to the terrace 411.

According to various embodiments, the cover 450 may be disposed to cover at least a partial area of the pouch 410, the terrace 411, the first electrode tab 1010, the second electrode tab 1020, the first protection circuit module 810, the second protection circuit module 820, and at least a portion of the connection circuit board 830. The cover 450 may form a space therein with the at least partial area of the pouch 410. Due to the double forming cell structure, the terrace 411 may be formed at a location in which the terrace 411 divides the thickness of the pouch 410 (e.g., a surface formed by the pouch 410 in the z-axis direction). Thus, the area formed by the cover 450 and the pouch 410 may be divided into an upper (e.g., z-axis upper) area (e.g., a first area) with respect to the terrace 411 and a lower (e.g., z-axis lower) area (e.g., a second area) with respect to the terrace 411.

According to various embodiments, the first protection circuit module 810 may be disposed in the upper area with respect to the terrace 411. According to an embodiment, the first protection circuit module 810 may be disposed in the upper area in the area formed by the cover 450 and the pouch 410. According to various embodiments, the second protection circuit module 820 may be disposed in the lower area with respect to the terrace 411. According to an embodiment, the second protection circuit module 820 may be disposed in the lower area in the area formed by the cover 450 and the pouch 410.

According to various embodiments, the first protection circuit module 810 and the second protection circuit module 820 may each be connected to the electrode assembly. According to an embodiment, the electrode assembly is disposed in the pouch 410, and the first electrode tab 1010 and the second electrode tab 1020 connected to the electrode assembly may extend to the outside of the pouch 410 through the terrace 411. According to an embodiment, the first protection circuit module 810 may be electrically connected to the electrode assembly via the first electrode tab 1010. According to an embodiment, the second protection circuit module 820 may be electrically connected to the electrode assembly via the second electrode tab 1020. According to an embodiment, the first protection circuit module 810 and/or the second protection circuit module 820 may identify the input/output current and/or voltage levels of the electrode assembly.

Referring to FIG. 10, the battery 400 may include multiple electrode tabs (e.g., the first electrode tab 1010 and the second electrode tab 1020). According to an embodiment, each of the first electrode tab 1010 and the second electrode tab 1020 may include at least one positive terminal and at least one negative terminal. The first electrode tab 1010 and/or the second electrode tab 1020 may be electrically connected to the electrode assembly and may extend to the outside of the pouch 410 through the terrace 411.

Referring to FIG. 10, the first protection circuit module 810 may be electrically connected to the electrode assembly via the first electrode tab 1010. The first electrode tab 1010 may include a positive terminal and a negative terminal. The first protection circuit module 810 may form an electrical connection with both the positive terminal and the negative terminal.

Referring to FIG. 10, the second protection circuit module 820 may be electrically connected to the electrode assembly via the second electrode tab 1020. The second electrode tab 1020 may include a positive terminal and a negative terminal. The second protection circuit module 820 may form an electrical connection with both the positive terminal and the negative terminal.

According to various embodiments disclosed herein, an electronic device 101 may include: as a battery 400 including a double forming cell structure, an electrode assembly 401a or 401b including a first electrode tab 1010 including a positive terminal 421 and a negative terminal 422; a pouch 410 which includes a terrace 411 sealing the pouch such that at least a portion of the first electrode tab 1010 is exposed to the outside, the pouch wrapping (forming) the electrode assembly with both surfaces thereof; a first protection circuit module 810 electrically connected to the electrode assembly via the exposed first electrode tab and disposed on one side of the terrace with respect to the extension direction of the first electrode tab; and a second protection circuit module 820 electrically connected to the electrode assembly and disposed on the other side of the terrace.

Furthermore, the pouch may include a shape of a plate having a thickness, the terrace may be disposed at a location in which the terrace divides the thickness of the pouch, the first protection circuit module may be disposed at a location corresponding to one side of the pouch divided by the terrace, and the second protection circuit module may be disposed at a location corresponding to the other side of the divided pouch.

Furthermore, the first protection circuit module may be electrically connected to the electrode assembly via the first electrode tab, and the second protection circuit module may be electrically connected to the first protection circuit module via a connection circuit board 830, and may be electrically connected to the electrode assembly via the first protection circuit module.

Furthermore, the terrace may include at least one hollow portion 412 formed in at least a partial area thereof, and the connection circuit board may connect the first protection circuit module and the second protection circuit module to each other via the hollow portion.

Furthermore, the connection circuit board may include a flexible printed circuit board (FPCB).

Furthermore, the electrode assembly may further include a second electrode tab which, together with the first electrode tab, at least partially is exposed outside the pouch, and includes a positive terminal and a negative terminal. The first protection circuit module may be electrically connected to the electrode assembly via the first electrode tab, and the second protection circuit module may be electrically connected to the electrode assembly via the second electrode tab.

Further, each of the first electrode tab and the second electrode tab may include at least one negative terminal and at least one positive terminal.

Furthermore, the electronic device may include a cover 450 disposed to cover an area, in which the terrace is formed, in at least a partial area of the pouch, wherein an area inside the cover is divided into a first area and a second area by the terrace, the first protection circuit module is disposed in the first area, and the second protection circuit module may be disposed in the second area.

Furthermore, the first protection circuit module and the second protection circuit module may be connected in parallel to each other with respect to the electrode assembly.

Furthermore, the first protection circuit module may include at least one integrated circuit (IC), and the integrated circuit may be configured to block a current of the battery based on at least one of a charge level of the battery and a current magnitude of the battery.

Furthermore, the second protection circuit module may include at least one transistor circuit.

Further, the first protection circuit module may include a first printed circuit board, the second protection circuit module may include a second printed circuit board, and the first printed circuit board and the second printed circuit board may be spaced apart from each other.

According to various embodiments disclosed herein, a battery 400 may include: an electrode assembly 401a or 401b including a first electrode tab 1010; a pouch 410 which includes a terrace 411 sealing the pouch such that at least a portion of the first electrode tab is exposed to the outside, the pouch wrapping the electrode assembly with both surfaces thereof; a first protection circuit module 810 electrically connected to the electrode assembly via the exposed first electrode tab and disposed on one side of the terrace with respect to the extension direction of the first electrode tab; and a second protection circuit module 820 electrically connected to the electrode assembly and disposed on the other side of the terrace.

Furthermore, the pouch may include a shape of a plate having a thickness, the terrace may be disposed at a location in which the terrace divides the thickness of the pouch, the first protection circuit module may be disposed at a location corresponding to one side of the pouch divided by the terrace, and the second protection circuit module may be disposed at a location corresponding to the other side of the divided pouch.

Furthermore, the first protection circuit module may be electrically connected to the electrode assembly via the first electrode tab, and the second protection circuit module may be electrically connected to the first protection circuit module via a printed circuit board (PCB) 440, and may be electrically connected to the electrode assembly via the first protection circuit module.

Furthermore, the terrace may include at least one hollow portion 412 formed in at least a partial area thereof, and the printed circuit board may connect the first protection circuit module and the second protection circuit module to each other via the hollow portion.

Furthermore, the printed circuit board may include a flexible printed circuit board (FPCB).

Furthermore, the electrode assembly may further include a second electrode tab 1020 which, together with the first electrode tab, at least partially extends out of the terrace. The first protection circuit module may be electrically connected to the electrode assembly via the first electrode tab, and the second protection circuit module may be electrically connected to the electrode assembly via the second electrode tab.

Furthermore, the battery may include a cover 450 disposed to cover an area, in which the terrace is formed, in at least a partial area of the pouch, wherein an area inside the cover is divided into a first area and a second area by the terrace, the first protection circuit module is disposed in the first area, and the second protection circuit module may be disposed in the second area.

Furthermore, the first protection circuit module and the second protection circuit module may be connected in parallel to each other with respect to the electrode assembly.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect(e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal(e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements(e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
as a battery comprising a double forming cell structure,
an electrode assembly comprising a first electrode tab comprising a positive terminal and a negative terminal;
a pouch which comprises a terrace sealing the pouch such that at least a portion of the first electrode tab is exposed outside, the pouch wrapping (forming) the electrode assembly with both surfaces thereof;
a first protection circuit module electrically connected to the electrode assembly via the exposed first electrode tab and disposed on one side of the terrace with respect to an extension direction of the first electrode tab; and
a second protection circuit module electrically connected to the electrode assembly and disposed on the other side of the terrace.

2. The electronic device of claim 1, wherein the pouch comprises a shape of a plate having a thickness,
wherein the terrace is disposed at a location in which the terrace divides the thickness of the pouch,
wherein the first protection circuit module is disposed at a location corresponding to one side of the pouch divided by the terrace, and
wherein the second protection circuit module is disposed at a location corresponding to the other side of the divided pouch.

3. The electronic device of claim 1, wherein the first protection circuit module is electrically connected to the electrode assembly via the first electrode tab, and
wherein the second protection circuit module is electrically connected to the first protection circuit module via a connection circuit board, and is electrically connected to the electrode assembly via the first protection circuit module.

4. The electronic device of claim 3, wherein the terrace comprises at least one hollow portion formed in at least a partial area thereof, and
wherein the connection circuit board is configured to connect the first protection circuit module and the second protection circuit module to each other via the hollow portion.

5. The electronic device of claim 1, wherein the electrode assembly further comprises a second electrode tab which, together with the first electrode tab, at least partially extends outside the pouch, and comprises a positive terminal and a negative terminal,
wherein the first protection circuit module is electrically connected to the electrode assembly via the first electrode tab, and
wherein the second protection circuit module is electrically connected to the electrode assembly via the second electrode tab.

6. The electronic device of claim 1, comprising a cover disposed to cover an area, in which the terrace is formed, in at least a partial area of the pouch,
wherein an area inside the cover is divided into a first area and a second area by the terrace,
wherein the first protection circuit module is disposed in the first area, and
wherein the second protection circuit module is disposed in the second area.

7. The electronic device of claim 1, wherein the first protection circuit module comprises at least one integrated circuit (IC), and
wherein the integrated circuit is configured to block a current of the battery based on at least one of a charge level of the battery and a current magnitude of the battery.

8. The electronic device of claim 1, wherein the second protection circuit module comprises at least one transistor circuit.

9. The electronic device of claim 1, wherein the first protection circuit module comprises a first printed circuit board,
wherein the second protection circuit module comprises a second printed circuit board, and
wherein the first printed circuit board and the second printed circuit board are spaced apart from each other.

10. A battery comprising:
an electrode assembly comprising a first electrode tab;
a pouch which comprises a terrace sealing the pouch such that at least a portion of the first electrode tab is exposed outside, the pouch wrapping the electrode assembly with both surfaces thereof;
a first protection circuit module electrically connected to the electrode assembly via the exposed first electrode tab and disposed on one side of the terrace with respect to the extension direction of the first electrode tab; and
a second protection circuit module electrically connected to the electrode assembly and disposed on the other side of the terrace.

11. The battery of claim 10, wherein the pouch comprises a shape of a plate having a thickness,
wherein the terrace is disposed at a location in which the terrace divides the thickness of the pouch,
wherein the first protection circuit module is disposed at a location corresponding to one side of the pouch divided by the terrace, and
wherein the second protection circuit module is disposed at a location corresponding to the other side of the divided pouch.

12. The battery of claim 10, wherein the first protection circuit module is electrically connected to the electrode assembly via the first electrode tab, and
wherein the second protection circuit module is electrically connected to the first protection circuit module via a printed circuit board (PCB), and is electrically connected to the electrode assembly via the first protection circuit module.

13. The battery of claim 12, wherein the terrace comprises at least one hollow portion formed in at least a partial area thereof, and
wherein the printed circuit board is configured to connect the first protection circuit module and the second protection circuit module to each other via the hollow portion.

14. The battery of claim 10, wherein the electrode assembly further comprises a second electrode tab which, together with the first electrode tab, at least partially extends out of the terrace,
wherein the first protection circuit module is electrically connected to the electrode assembly via the first electrode tab, and
wherein the second protection circuit module is electrically connected to the electrode assembly via the second electrode tab.

15. The battery of claim 10, comprising a cover disposed to cover an area, in which the terrace is formed, in at least a partial area of the pouch,
wherein an area inside the cover is divided into a first area and a second area by the terrace,
wherein the first protection circuit module is disposed in the first area, and
wherein the second protection circuit module is disposed in the second area.
